# EUROPÄISCHE PATENTSCHRIFT

(11) **EP 4 339 081 B1**
(45) Veröffentlichungstag und Bekanntmachung des Hinweises auf die Patenterteilung: **09.04.2025**
(21) Anmeldenummer: 22195628.7
(22) Anmeldetag: 14.09.2022
(51) Int. Cl.: B62J 1/18, B62J 1/20, B62J 1/26

(54) **FAHRRADSATTELHÜLLE**
BICYCLE SADDLE COVER
HOUSSE DE SELLE VÉLO

(43) Veröffentlichungstag der Anmeldung: 20.03.2024
(73) Patentinhaber: SQlab GmbH, 82024 Taufkirchen (DE)
(72) Erfinder: Hild, Tobias, 82024 Taufkirchen (DE); Schlecht, Michael, 85521 Ottobrunn (DE)
(74) Vertreter: Koelle, Alexander

(56) Entgegenhaltungen:
- EP-A1- 3 907 125
- JP-A- H04 297 388
- JP-U- H01 117 986
- TW-A- 201 302 533

## Beschreibung

### Technisches Gebiet

Die vorliegende Erfindung betrifft einen Fahrradsattel, welcher an einem Fahrrad befestigbar ist, mit einer Fahrradsattelschale, welche zwei sich gegenüberliegende Ausnehmungen aufweist, und mit einer Dämpfungsschicht, welche zwei sich gegenüberliegende Vorsprünge aufweist, welche jeweils die gegenüberliegenden Ausnehmungen der Fahrradsattelschale hintergreifen, um eine formschlüssige Befestigung der Dämpfungsschicht an der Fahrradsattelschale zu erreichen.

### Stand der Technik

Es ist bekannt, dass ein herkömmlicher Fahrradsattel eine Fahrradsattelschale aufweist, die aus einem harten, widerstandsfähigen Material geformt ist, um das Gewicht des auf dem entsprechenden Fahrradsattel sitzenden Fahrradfahrers aufzunehmen.

Um ein ergonomisch vorteilhaftes Sitzen des Fahrradfahrers auf einem entsprechenden Fahrradsattel sicherzustellen, weist ein herkömmlicher Fahrradsattel üblicherweise eine Dämpfung aus einem weichen Material auf, welche auf der Fahrradsattelschale angebracht ist, und welche eine angenehme Auflage des Gesäßes des Fahrradfahrers auf dem Fahrradsattel ermöglicht.

Ferner ist bekannt, dass ein herkömmlicher Fahrradsattel insbesondere einen Fahrradsattelbezug aufweisen kann, welcher auf der auf der Fahrradsattelschale angebrachten Dämpfung angeordnet ist, um einen wirksamen Schutz der Dämpfung sicherzustellen.

Bei einem herkömmlichen Fahrradsattel besteht oftmals das Problem, dass die auf der Fahrradsattelschale angebrachte Dämpfung unlösbar mit der Fahrradsattelschale verbunden ist, und aus diesem Grund, z.B. bei einer Beschädigung der Dämpfung, der gesamte Fahrradsattel ausgetauscht werden muss, was für den Nutzer zu einem hohen Kostenaufwand führt.

Ein weiteres Problem ist, dass die auf der Fahrradsattelschale eines herkömmlichen Fahrradsattels angeordnete Dämpfung üblicherweise in einer standardisierten Ausführung verwendet wird. Aufgrund der standardisierten Ausführung erfolgt üblicherweise keine individuelle Anpassung einer entsprechenden Dämpfung in Bezug auf unterschiedliche Fahrradfahrer, z.B. in Bezug auf Gewicht und/oder Anatomie, oder in Bezug auf unterschiedliche Fahrstrecken, z.B. in Bezug auf eine Mountainbike-Tour im Gelände oder einer Rennrad-Tour auf der Straße.

Zudem kann ein entsprechend herkömmlicher Fahrradsattel mit einer standardisiert ausgeführten Dämpfung individuelle Designwüsche des jeweiligen Fahrradfahrers, z.B. in Bezug auf Form und Farbe, oftmals nur unzureichend abbilden.

Die EP 3 441 291 A1 offenbart einen ergonomischen Fahrradsattel zur Druckentlastung der Gesäßknochen des Fahrradfahrers, wobei der Fahrradsattel eine Sattelbasis, eine auf der Sattelbasis angeordnete elastische Schicht, und zwei auf der elastischen Schicht angeordnete Gesäßknochenauflageelemente aufweist.

Die EP 3 907 125 A1 offenbart eine Fahrradsattelhülle, welche an einer Fahrradsattelschale eines Fahrradsattels befestigbar ist. Hierbei weist die Fahrradsattelhülle einen Kontaktbereich mit einem Befestigungselement auf, um den Kontaktbereich an der Fahrradsattelschale zu befestigen. Ferner weist die Fahrradsattelhülle einen aus einem elastischen Material geformten Dämpfungsbereich auf, welcher an einem dem Kontaktbereich abgewandten Bereich der Fahrradsattelhülle angeordnet ist. EP 3 907 125 A1 offenbart die Merkmale des Oberbegriffs von Anspruch 1.

### Offenlegung der Erfindung

Die vorliegende Erfindung stellt sich zur Aufgabe, eine Fahrradsattelhülle mit einem Dämpfungsbereich bereitzustellen, welcher einfach und vorteilhaft an einer Fahrradsattelschale eines Fahrradsattels eines Fahrrads befestigbar ist.

Die Aufgabe der Erfindung wird durch den Fahrradsattel nach Anspruch 1 gelöst. Die abhängigen Ansprüche beanspruchen bevorzugte Ausführungsformen.

Gemäß einem Aspekt der vorliegenden Erfindung wird die vorliegende Aufgabe durch einen Fahrradsattel gelöst, welcher an einem Fahrrad befestigbar ist, wobei der Fahrradsattel eine Sattelnase und einen hinteren Bereich aufweist, und wobei der Fahrradsattel einen mittleren Bereich aufweist, welcher zwischen dem hinteren Bereich und der Sattelnase angeordnet ist, wobei der Fahrradsattel eine Fahrradsattelschale und eine Dämpfungsschicht aufweist, welche an der Fahrradsattelschale befestigt ist, wobei die Dämpfungsschicht ein elastisches Material umfasst, welches ausgebildet ist, auf den Fahrradsattel wirkende Kräfte durch eine Verformung des elastischen Materials aufzunehmen.

Der Fahrradsattel ist dadurch gekennzeichnet, dass die Fahrradsattelschale durch einen umlaufenden Schalenrand begrenzt ist, wobei an einer Unterseite der Fahrradsattelschale zwei sich gegenüberliegende Ausnehmungen geformt sind, welche sich im mittleren Bereich des Fahrradsattels jeweils abschnittsweise entlang des Schalenrands erstrecken.

Der Fahrradsattel ist ferner dadurch gekennzeichnet, dass die Dämpfungsschicht durch einen umlaufenden Schichtrand begrenzt ist, wobei die Dämpfungsschicht zwei sich gegenüberliegende Vorsprünge aufweist, welche sich im mittleren Bereich des Fahrradsattels jeweils abschnittsweise entlang des Schichtrands erstrecken.

Der Fahrradsattel ist ferner dadurch gekennzeichnet, dass die beiden Vorsprünge ausgebildet sind, jeweils die gegenüberliegenden Ausnehmungen zu hintergreifen, um eine formschlüssige Befestigung der Dämpfungsschicht an der Fahrradsattelschale zu erreichen.

Durch die Vorsprünge kann die Dämpfungsschicht besonders einfach und vorteilhaft an der Fahrradsattelschale befestigt werden.

Die Dämpfungsschicht, welche ein elastisches Material umfasst, ist ausgebildet, die auf die Fahrradsattelhülle wirkenden Kräfte durch eine Verformung des elastischen Materials aufzunehmen. Dadurch kann beispielsweise der Vorteil erreicht werden, dass ein ergonomisch angenehmes Sitzes auf dem Fahrradsattel ermöglicht wird. Insbesondere ist die Form der Dämpfungsschicht, insbesondere die Struktur des elastischen Materials an das Gesäß des Fahrradfahrers angepasst.

An der Unterseite der Fahrradsattelschale sind zwei sich gegenüberliegende Ausnehmungen geformt, welche durch zwei Vorsprünge der Dämpfungsschicht jeweils hintergriffen werden, so dass eine wirksame formschlüssige Befestigung der Dämpfungsschicht an der Fahrradsattelschale erreicht wird.

Hierbei ist die Unterseite der Fahrradsattelschale in der Montageposition des Fahrradsattels der Fahrbahn zugewandt. Insbesondere ist die Unterseite der Fahrradsattelschale als eine gekrümmte, insbesondere konkav gekrümmte, Unterseite der Fahrradsattelschale geformt. Hierbei ist eine der Unterseite der Fahrradsattelschale abgewandte Oberseite der Fahrradsattelschale in der Montageposition des Fahrradsattels der Fahrbahn abgewandt. Insbesondere ist die Oberseite der Fahrradsattelschale als eine gekrümmte, insbesondere konvex gekrümmte, Oberseite der Fahrradsattelschale geformt. Die Unterseite der Fahrradsattelschale wird hierbei durch den umlaufenden Schalenrand der Fahrradsattelschale von der Oberseite der Fahrradsattelschale abgegrenzt.

Hierbei ist die Dämpfungsschicht insbesondere an der Oberseite der Fahrradsattelschale angeordnet, so dass die beiden Vorsprünge der Dämpfungsschicht über den Schalenrand der Fahrradsattelschale hinweggreifen, um die an der Unterseite der Fahrradsattelschale angeordneten jeweiligen Ausnehmungen zu hintergreifen, um die formschlüssige Befestigung der Dämpfungsschicht an der Fahrradsattelschale zu erreichen.

Die formschlüssige Befestigung stellt hierbei einerseits eine stabile Befestigung der Dämpfungsschicht an der Fahrradsattelschale sicher, und stellt auf der anderen Seite auch eine lösbare Befestigungsmöglichkeit bereit, um die Dämpfungsschicht wieder von der Fahrradsattelschale zu entfernen.

Insbesondere sind die Vorsprünge lösbar mit der Fahrradsattelschale verbindbar, um die Dämpfungsschicht lösbar mit der Fahrradsattelschale zu verbinden. Dadurch wird der technische Vorteil erreicht, dass durch die lösbare Verbindung zwischen den Vorsprüngen und der Fahrradsattelschale die Dämpfungsschicht einfach von der Fahrradsattelschale entfernt werden kann. Dies ermöglicht einen flexiblen Austausch der Dämpfungsschicht, wenn z.B. in Bezug auf unterschiedliche Fahrradfahrer oder unterschiedliche Fahrradtour-Anforderungen zeitnah und individuell eine unterschiedliche Dämpfungsschicht auf der Fahrradsattelschale befestigt werden soll.

Eine lösbare Verbindung der Vorsprünge der Dämpfungsschicht mit der Fahrradsattelschale gemäß der vorliegenden Offenbarung umfasst insbesondere die folgende Bedeutung, wonach die Dämpfungsschicht von der Fahrradsattelschale entfernt werden kann, ohne dass die Fahrradsattelschale oder die Dämpfungsschicht hierbei beschädigt werden. Insbesondere kann eine lösbare Verbindung der Vorsprünge der Dämpfungsschicht mit der Fahrradsattelschale gemäß der vorliegenden Offenbarung ohne ein Werkzeug gelöst werden.

Dadurch kann die Dämpfungsschicht einfach und vorteilhaft an der Fahrradsattelschale befestigt werden, bzw. im Rahmen eines Austausches der Dämpfungsschicht auch wieder einfach und vorteilhaft von der Fahrradsattelschale entfernt werden.

Ferner wird betont, dass der Fahrradsattel neben der Sattelnase und dem hinteren Bereich noch einen mittleren Bereich aufweist, welcher die Sattelnase mit dem hinteren Bereich verbindet. Der hintere Bereich des Fahrradsattels weist hierbei eine ausreichende Breite auf, so dass das Gesäß des Fahrradfahrers während des Gebrauchs des Fahrradsattels vorteilhaft auf dem hinteren Bereich positioniert werden kann.

Die Sattelnase, welche an einer dem hinteren Bereich abgewandten Vorderseite des Fahrradsattels angeordnet ist, erstreckt sich während des Gebrauchs des Fahrradsattels zwischen den beiden Innenflächen der Oberschenkel des Fahrradfahrers nach vorne hinaus, und weist daher eine geringere Breite als der hintere Bereich des Fahrradsattels auf.

Der sich zwischen der Sattelnase und dem hinteren Bereich erstreckende mittlere Bereich des Fahrradsattels verjüngt sich von dem hinteren Bereich aus in Richtung der Sattelnase, so dass während des Gebrauchs des Fahrradsattels der mittlere Bereich zwischen den beiden Innenflächen der Oberschenkel des Fahrradfahrers angeordnet ist.

Hierbei sind sowohl die beiden gegenüberliegenden Ausnehmungen der Fahrradsattelschale als auch die beiden gegenüberliegenden Vorsprünge der Dämpfungsschicht im mittleren Bereich des Fahrradsattels geformt. Dadurch wird der Vorteil erreicht, dass eine wirksame beidseitige und mittige Befestigung der Dämpfungsschicht an der Fahrradsattelschale erreicht wird.

**In** einer Ausführungsform ist der umlaufende Schalenrand der Fahrradsattelschale im mittleren Bereich des Fahrradsattels durch die beiden Vorsprünge der Dämpfungsschicht abgedeckt.

Dadurch wird der technische Vorteil erreicht, dass während des Gebrauchs des Fahrradsattels die beiden Innenflächen der Oberschenkel des Fahrradfahrers nicht mit dem umlaufenden Schalenrand in Kontakt kommen. Die aus dem elastischen Material der Dämpfungsschicht bestehenden Vorsprünge, welche den umlaufenden Schalenrand der Fahrradsattelschale abdecken, stellen hierbei sicher, dass eine wirksame Polsterung erreicht wird, so dass ein ergonomisch optimaler Gebrauch des Fahrradsattels sichergestellt wird.

**In** einer Ausführungsform ist der umlaufende Schalenrand der Fahrradsattelschale im Bereich der Sattelnase des Fahrradsattels und im hinteren Bereich des Fahrradsattels durch den umlaufenden Schichtrand der Dämpfungsschicht nicht abgedeckt.

Dadurch wird der technische Vorteil erreicht, dass ein herstellungstechnisch aufwendiges vollumlaufendes Anbringen der Vorsprünge der Dämpfungsschicht im Bereich der Sattelnase und des hinteren Bereichs des Fahrradsattels vermieden wird, und nur der für die Ergonomie entscheidende umlaufende Schalenrand des mittleren Bereichs des Fahrradsattels durch die Vorsprünge abdeckt ist.

**In** einer Ausführungsform weisen die beiden Ausnehmungen jeweils einen konvex gekrümmten Ausnehmungsabschnitt und einen sich an den konvex gekrümmten Ausnehmungsabschnitt anschließenden konkav gekrümmten Ausnehmungsabschnitt auf, wobei insbesondere der konkav gekrümmte Ausnehmungsabschnitt der jeweiligen Ausnehmung in einem der Sattelnase zugewandten Abschnitt des mittleren Bereichs des Fahrradsattels angeordnet ist, und wobei insbesondere der konvex gekrümmte Ausnehmungsabschnitt der jeweiligen Ausnehmung in einem dem hinteren Bereich zugewandten Abschnitt des mittleren Bereichs des Fahrradsattels angeordnet ist.

Dadurch wird der technische Vorteil erreicht, dass durch die konvexe Krümmung und durch die konkave Krümmung die Erstreckungsrichtung der jeweiligen Ausnehmung vorteilhaft an den entsprechend gekrümmten umlaufenden Schalenrand der Fahrradsattelschale angepasst werden kann.

Dementsprechend weist der umlaufende Schalenrand der Fahrradsattelschale im mittleren Bereich des Fahrradsattels insbesondere zwei einander gegenüberliegende konvex gekrümmte Abschnitte auf, neben denen an der Unterseite der Fahrradsattelschale dementsprechend die beiden konvex gekrümmten Ausnehmungsabschnitte der jeweiligen Ausnehmung gegenüberliegend angeordnet sind.

Dementsprechend weist der umlaufende Schalenrand der Fahrradsattelschale im mittleren Bereich des Fahrradsattels insbesondere zwei einander gegenüberliegende konkav gekrümmte Ausnehmungsabschnitte auf, neben denen an der Unterseite der Fahrradsattelschale dementsprechend die beiden konkav gekrümmten Ausnehmungsabschnitte der jeweiligen Ausnehmung gegenüberliegend angeordnet sind.

**In** einer Ausführungsform sind die beiden an der Unterseite der Fahrradsattelschale geformten sich gegenüberliegenden Ausnehmungen jeweils durch den Schalenrand und durch eine an der Unterseite der Fahrradsattelschale geformte Schalenrippe begrenzt, wobei sich die jeweilige Schalenrippe winklig, insbesondere rechtwinklig, zum jeweiligen Schalenrand erstreckt.

Dadurch wird der technische Vorteil erreicht, dass die jeweilige Schalenrippe eine wirksame Positionierung des jeweiligen Vorsprungs in der jeweiligen Ausnehmung ermöglicht, so dass eine wirksame formschlüssige Verbindung zwischen der Fahrradsattelschale und der Dämpfungsschicht bereitgestellt wird.

**In** einer Ausführungsform weisen die beiden Schalenrippen jeweils einen konvex gekrümmten Schalenrippenabschnitt und einen sich an den konvex gekrümmten Schalenrippenabschnitt anschließenden konkav gekrümmten Schalenrippenabschnitt auf, wobei insbesondere der konkav gekrümmte Schalenrippenabschnitt der jeweiligen Schalenrippe in einem der Sattelnase zugewandten Abschnitt des mittleren Bereichs des Fahrradsattels angeordnet ist, und wobei insbesondere der konvex gekrümmte Schalenrippenabschnitt der jeweiligen Schalenrippe in einem dem hinteren Bereich zugewandten Abschnitt des mittleren Bereichs des Fahrradsattels angeordnet ist.

Dadurch wird der technische Vorteil erreicht, dass durch die konvexe Krümmung und durch die konkave Krümmung die Erstreckungsrichtung die jeweilige Schalenrippe vorteilhaft an den entsprechend gekrümmten umlaufenden Schalenrand der Fahrradsattelschale angepasst werden kann.

Dementsprechend weist der umlaufende Schalenrand der Fahrradsattelschale im mittleren Bereich des Fahrradsattels insbesondere zwei einander gegenüberliegende konvex gekrümmte Abschnitte auf, neben denen an der Unterseite der Fahrradsattelschale dementsprechend die konvex gekrümmten Schalenrippenabschnitte der jeweiligen Schalenrippe gegenüberliegend angeordnet sind.

Dementsprechend weist der umlaufende Schalenrand der Fahrradsattelschale im mittleren Bereich des Fahrradsattels insbesondere zwei einander gegenüberliegende konkav gekrümmte Abschnitte auf, neben denen an der Unterseite der Fahrradsattelschale dementsprechend die konkav gekrümmten Schalenrippenabschnitte der jeweiligen Schalenrippe gegenüberliegend angeordnet sind.

Insbesondere verlaufen die konkav gekrümmten Ausnehmungsabschnitte der jeweiligen Ausnehmungen, die konkav gekrümmten Schalenrippenabschnitte der jeweiligen Schalenrippe und der entsprechend konkav gekrümmte Schalenrand der Fahrradsattelschale nebeneinander.

Insbesondere verlaufen die konvex gekrümmten Ausnehmungsabschnitte der jeweiligen Ausnehmungen, die konvex gekrümmten Schalenrippenabschnitte der jeweiligen Schalenrippe und der entsprechend konvex gekrümmte Schalenrand der Fahrradsattelschale nebeneinander.

**In** einer Ausführungsform ist die jeweilige Ausnehmung an der Grenze zwischen dem mittleren Bereich und der Sattelnase des Fahrradsattels durch einen vorderen Wandungsabschnitt begrenzt, und ist die jeweilige Ausnehmung an der Grenze zwischen dem mittleren Bereich und dem hinteren Bereich des Fahrradsattels durch einen hinteren Wandungsabschnitt begrenzt.

Dadurch wird der technische Vorteil erreicht, dass durch den jeweiligen vorderen, bzw. hinteren Wandungsabschnitt ein Herausrutschen des jeweiligen Vorsprungs aus der jeweiligen Ausnehmung nach vorne, bzw. nach hinten verhindert wird.

Insbesondere wird die jeweilige Ausnehmung vorderseitig durch den vorderen Wandungsabschnitts, lateralseitig durch die jeweilige Schalenrippe, und rückseitig durch den jeweiligen hinteren Wandungsabschnitt begrenzt.

**In** einer Ausführungsform weist der umlaufende Schalenrand im Bereich der Sattelnase des Fahrradsattels einen vorderen Schalenflansch auf, welcher über den Schalenrand im mittleren Bereich des Fahrradsattels hinausragt, wobei der vordere Schalenflansch die Fahrradsattelschale zwischen den beiden Ausnehmungen umläuft, und wobei insbesondere der Schichtrand der Dämpfungsschicht den vorderen Schalenflansch nicht übergreift.

Dadurch wird der technische Vorteil erreicht, dass der vordere Sattelflansch des umlaufenden Schalenrands eine wirksame Stabilisierung des Schichtrands der Dämpfungsschicht im Bereich der Sattelnase des Fahrradsattels ermöglicht.

**In** einer Ausführungsform weist der umlaufende Schalenrand im hinteren Bereich des Fahrradsattels einen hinteren Schalenflansch auf, welcher über den Schalenrand im mittleren Bereich des Fahrradsattels hinausragt, wobei der hintere Schalenflansch die Fahrradsattelschale zwischen den beiden Ausnehmungen umläuft, und wobei insbesondere der Schichtrand der Dämpfungsschicht den hinteren Schalenflansch nicht übergreift.

Dadurch wird der technische Vorteil erreicht, dass der hintere Sattelflansch des umlaufenden Schalenrands eine wirksame Stabilisierung des Schichtrands der Dämpfungsschicht im hinteren Bereich des Fahrradsattels ermöglicht.

**In** einer Ausführungsform weisen der vordere Schalenflansch und/oder der hintere Schalenflansch eine der Unterseite der Fahrradsattelschale abgewandte Flanschoberseite auf, wobei der Schichtrand der Dämpfungsschicht auf der Flanschoberseite des vorderen Schalenflanschs und/oder auf der Flanschoberseite des hinteren Schalenflanschs aufliegt.

Dadurch wird der technische Vorteil erreicht, dass durch das Aufliegen des Schichtrands der Dämpfungsschicht auf der Flanschoberseite des vorderen Schalenflanschs und/oder auf der Flanschoberseite des hinteren Schalenflanschs eine vorteilhafte Stütze für die Dämpfungsschicht bereitgestellt wird.

**In** einer Ausführungsform ist die Unterseite der Fahrradsattelschale im Bereich der beiden an der Unterseite der Fahrradsattelschale geformten Ausnehmungen eben geformt oder weist die Unterseite der Fahrradsattelschale im Bereich der beiden an der Unterseite der Fahrradsattelschale geformten Ausnehmungen eine sich entlang des Schalenrands erstreckende Vertiefung aufweist.

Dadurch wird der technische Vorteil erreicht, dass je nach Ausbildung der Ausnehmungen der jeweilige Vorsprung der Dämpfungsschicht im Bereich der jeweiligen Ausnehmung entweder an der eben geformten Unterseite der Fahrradsattelschale anliegt, oder in die jeweilige Vertiefung eingreift, um eine wirksame Befestigung der Dämpfungsschicht an der Fahrradsattelschale sicherzustellen.

In einer Ausführungsform ist die Dämpfungsschicht mit der Fahrradsattelschale formschlüssig, sowie kraftschlüssig und/oder stoffschlüssig verbunden.

Dadurch wird der technische Vorteil erreicht, dass neben der formschlüssigen Verbindung die zusätzliche kraftschlüssige und/oder stoffschlüssige Verbindung eine besonders wirksame und damit stabile Befestigung der Dämpfungsschicht an der Fahrradsattelschale sicherstellt.

Eine entsprechende kraftschlüssige Verbindung zwischen der Dämpfungsschicht und der Fahrradsattelschale umfasst insbesondere eine Klemmverbindung, eine Schraubverbindung und/oder eine Rastverbindung.

Eine entsprechende stoffschlüssige Verbindung zwischen der Dämpfungsschicht und der Fahrradsattelschale umfasst insbesondere eine Klebeverbindung, und/oder eine Schweißverbindung.

In einer Ausführungsform weist der Fahrradsattel einen Fahrradsattelbezug auf, welcher das elastische Material der Dämpfungsschicht zumindest abschnittsweise, insbesondere vollständig, umschließt.

Dadurch wird der technische Vorteil erreicht, dass ein entsprechender Fahrradsattelbezug einen wirksamen Schutz des elastischen Materials der Dämpfungsschicht, insbesondere gegen Anrieb und/oder gegen äußere Witterungseinflüsse ermöglicht.

In einer Ausführungsform umfasst die Fahrradsattelschale einen Thermoplast-Kunststoff oder einen Carbon-Thermoplast-Verbundstoff, und/oder umfasst die Dämpfungsschicht ein thermoplastisches Polyurethan (TPU), insbesondere expandiertes thermoplastisches Polyurethan (E-TPU), ein thermoplastisches Elastomer (TPE), ein thermoplastisches Elastomer-Vulkanisat (TPE-V), Polyurethan (PU), Ethylen-Vinylacetat-Copolymer (EVA), und/oder Polystyrol (PS), insbesondere expandiertes Polystyrol (EPS).

Dadurch wird der technische Vorteil erreicht, dass durch den Thermoplast-Kunststoff oder einen Carbon-Thermoplast-Verbundstoff der Fahrradsattelschale ein besonders hartes und widerstandsfähiges Material der Fahrradsattelschale bereitgestellt werden kann. Die für die Dämpfungsschicht genannten elastischen Materialien stellen die wirksamen elastischen Eigenschaften des elastischen Materials der Dämpfungsschicht sicher.

In einer Ausführungsform ist die Fahrradsattelschale als ein 3D-Druck-Bauteil oder als ein Spritzgussformteil geformt.

Dadurch wird der technische Vorteil erreicht, dass eine besonders einfache und damit kostengünstige Fertigung der Fahrradsattelschale sichergestellt ist.

In einer Ausführungsform weist die Dämpfungsschicht zwei sich gegenüberliegende weitere Vertiefungen auf, welche jeweils insbesondere zwischen dem jeweiligen Vorsprung der Dämpfungsschicht und einem Hauptkörper der Dämpfungsschicht angeordnet ist, wobei der Schalenrand der Fahrradsattelschale im mittleren Bereich des Fahrradsattels in die jeweilige weitere Vertiefung der Dämpfungsschicht eingreift, um eine wirksame Arretierung des jeweiligen Vorsprungs in der jeweiligen Ausnehmung zu erreichen.

Dadurch wird der technische Vorteil erreicht, dass durch das Eingreifen des Schalenrands der Fahrradsattelschale in die jeweilige weitere Vertiefung der Dämpfungsschicht ein unbeabsichtigtes Herausrutschen des jeweiligen Vorsprungs der Dämpfungsschicht aus der jeweiligen Ausnehmung der Fahrradsattelschale verhindert wird.

### Kurze Beschreibung der Figuren

Die Erfindung wird nun unter Bezugnahme auf die beigefügten Figuren erläutert, die exemplarische und nicht beschränkende Ausführungsformen der Erfindung zeigen, wobei
- Figur 1: einen Fahrradsattel eines Fahrrads gemäß einer ersten Ausführungsform in einer Explosionsdarstellung,
- Figur 2: den Fahrradsattel gemäß der ersten Ausführungsform in einer unterseitigen Darstellung,
- Figur 3: den Fahrradsattel gemäß der ersten Ausführungsform in einer seitlichen Darstellung, und
- Figur 4: den Fahrradsattel gemäß der ersten Ausführungsform in einer Schnittdarstellung zeigt.

### Detaillierte Beschreibung der Figuren

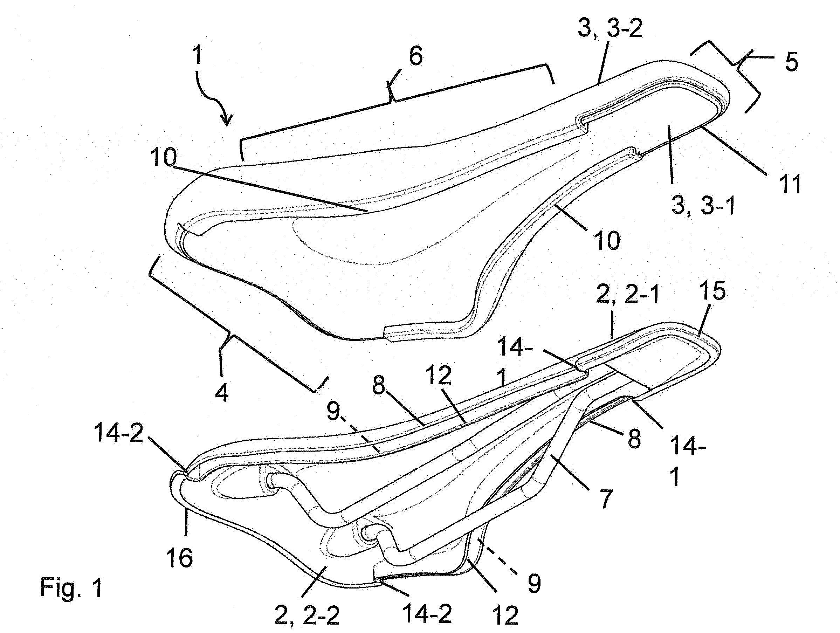

Figur 1 zeigt einen Fahrradsattel eines Fahrrads gemäß einer ersten Ausführungsform in einer Explosionsdarstellung.

Der in der Figur 1 dargestellte Fahrradsattel 1 ist an einem in Figur 1 nicht dargestellten Fahrrad befestigbar, insbesondere mittels einer in Figur 1 nicht dargestellter Sattelstange, welche an einem Fahrradrahmen des Fahrrads befestigbar ist. In der Figur 1 ist der Fahrradsattel 1 in einer Explosionsdarstellung dargestellt, in welcher die Fahrradsattelschale 2 und die Dämpfungsschicht 3 getrennt voneinander dargestellt sind. Während des Betriebs des Fahrradsattels 1, d.h. in der Montageposition des Fahrradsattels 1 an dem Fahrrad, sind die Fahrradsattelschale 2 und die Dämpfungsschicht 3 miteinander verbunden.

Wie in der Figur 1 lediglich schematisch dargestellt ist, weist der Fahrradsattel 1 einen hinteren Bereich 4 auf, auf welchem in der Montageposition des Fahrradsattels 1 das Gesäß des Fahrradfahrers positioniert ist, weist der Fahrradsattel 1 eine Sattelnase 5 auf, welche an einer dem hinteren Bereich 4 abgewandten Vorderseite des Fahrradsattels 1 angeordnet ist, und weist der Fahrradsattel 1 einen mittleren Bereich 6 auf, welcher zwischen dem hinteren Bereich 4 und der Sattelnase 5 angeordnet ist.

Die Fahrradsattelschale 2 des Fahrradsattels 1 weist ferner eine Sattelhalterung 7 auf, welche mit einer in Figur 1 nicht dargestellten Sattelstange verbunden, welche wiederum eine physische Verbindung zwischen dem Fahrradsattel 1 und dem Fahrrad, insbesondere dem Fahrradrahmen, sicherstellt.

Die Fahrradsattelschale 2 besteht üblicherweise aus einem widerstandsfähigen und harten Kunststoffmaterial, wie z.B. einem Thermoplast-Kunststoff oder einem Carbon-Thermoplast-Verbundstoff, und stellt die strukturelle Stabilität des Fahrradsattels 1 sicher, wodurch eine wirksame Aufnahme des Gewichts des Fahrradfahrers sichergestellt wird.

Aus ergonomischen Gründen kann der Fahrradfahrer jedoch nicht direkt auf der harten Fahrradsattelschale 2 sitzen, so dass ein Fahrradsattel 1 üblicherweise, zumindest im Bereich der Hauptsitzfläche, Dämpfungselemente, wie z.B. Styroporelemente, aufweist, welche ein für den Fahrradfahrer angenehmes Sitzen auf dem Fahrradsattel 1 ermöglichen. Entsprechend weist der erfindungsgemäße Fahrradsattel 1 gemäß der Figur 1 eine Dämpfungsschicht 3 auf.

Um eine wirksame Dämpfung des auf dem Fahrradsattel 1 sitzenden Fahrradfahrers sicherzustellen, umfasst die Dämpfungsschicht 3 ein elastisches Material, welches ausgebildet ist, auf die Dämpfungsschicht 3 wirkende Kräfte durch eine Verformung des elastischen Materials aufzunehmen.

Das elastische Material der Dämpfungsschicht 3 umfasst insbesondere ein thermoplastisches Polyurethan (TPU), insbesondere ein expandiertes thermoplastisches Polyurethan (E-TPU), ein thermoplastisches Elastomer (TPE), ein thermoplastisches Elastomer-Vulkanisat (TPE-V), Polyurethan (PU), Ethylen-Vinylacetat-Copolymer (EVA), und/oder Polystyrol (PS), insbesondere expandiertes Polystyrol (EPS).

Die entsprechende dämpfende Funktion wird durch die in der Figur 1 dargestellte Dämpfungsschicht 3 erreicht. Hierbei liegt eine Unterseite 3-1 der Dämpfungsschicht 3 an einer Oberseite 2-1 der Fahrradsattelschale 2 an.

Die Fahrradsattelschale 2 wird durch einen umlaufenden Schalenrand 8 begrenzt. An einer Unterseite 2-2 der Fahrradsattelschale 2 sind hierbei zwei sich gegenüberliegende Ausnehmungen 9 geformt, welche sich im mittleren Bereich 6 des Fahrradsattels 1 jeweils abschnittsweise entlang des Schalenrands 8 erstrecken.

Der Schalenrand 8 grenzt hierbei die Unterseite 2-2 der Fahrradsattelschale 2 von der Oberseite 2-1 der Fahrradsattelschale 2 ab.

Um eine wirksame Befestigung der Dämpfungsschicht 3 an der Fahrradsattelschale 2 zu ermöglichen, weist die Dämpfungsschicht 3 zwei sich gegenüberliegende Vorsprünge 10 auf, welche sich im mittleren Bereich 6 des Fahrradsattels 1 jeweils abschnittsweise entlang eines Schichtrands 11 der Dämpfungsschicht 3 erstrecken.

Der Schichtrand 11 grenzt hierbei die Unterseite 3-1 der Dämpfungsschicht 3 von der Oberseite 3-2 der Dämpfungsschicht 3 ab.

Die beiden Vorsprünge 10 der Dämpfungsschicht 3 sind hierbei ausgebildet, die jeweils gegenüberliegenden Ausnehmungen 9 der Fahrradsattelschale 2 zu hintergreifen, um eine formschlüssige Befestigung der Dämpfungsschicht 3 an der Fahrradsattelschale 2 zu erreichen.

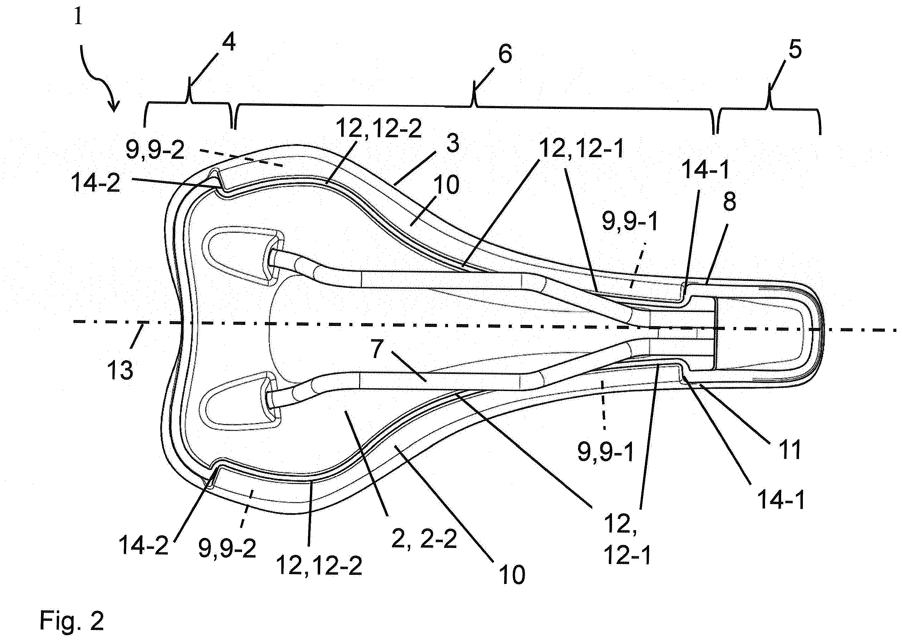

Für eine detaillierte Beschreibung der entsprechenden Befestigung der Vorsprünge 10 der Dämpfungsschicht 3 an den Ausnehmungen 9 der Fahrradsattelschale 2 wird hierbei auf die nachfolgenden Ausführungen zu den Figuren 2, 3, und 4 verwiesen.

Wie aus der Figur 1 entnommen werden kann, ist die Unterseite 2-2 der Fahrradsattelschale 2 im Bereich der Ausnehmungen 9 eben geformt, und liegen die beiden Vorsprünge 10 der Dämpfungsschicht 3 an der ebenen Fläche der Ausnehmungen 9 an.

Allerdings kann gemäß einer optionalen Variante im Bereich der beiden an der Unterseite 2-2 der Fahrradsattelschale 2 geformten Ausnehmungen 9 auch eine sich entlang des Schalenrands 8 erstreckende Vertiefung angeordnet sein, in welche beispielsweise ein Wulst des jeweiligen Vorsprungs 10 eingreift, um eine besonders wirksame Halterung des jeweiligen Vorsprungs 10 in der jeweiligen Ausnehmung 9 sicherzustellen.

Für die entsprechende formschlüssige Befestigung der Dämpfungsschicht 3 an der Fahrradsattelschale 2 wird hierbei ferner auf die Darstellungen gemäß den Figuren 2, 3 und 4 verwiesen.

Zudem kann die Dämpfungsschicht 3 mit der Fahrradsattelschale 2 formschlüssig, sowie kraftschlüssig und/oder stoffschlüssig verbunden sein. Dies bedeutet, dass neben der formschlüssigen Befestigung der Dämpfungsschicht 3 an der Fahrradsattelschale 2 noch eine kraftschlüssige Befestigung, insbesondere Schraubbefestigung, Klemmbefestigung und/oder Rastbefestigung, und alternativ oder zusätzlich noch eine stoffschlüssige Befestigung, insbesondere Klebebefestigung und/oder Schweißbefestigung, vorliegt, um die Dämpfungsschicht 3 mit der Fahrradsattelschale 2 zu verbinden.

Insbesondere können die Vorsprünge 10 der Dämpfungsschicht 3 hierbei eine Eigenspannung aufweisen, wodurch die Dämpfungsschicht 3 ferner auf die Fahrradsattelschale 2 gepresst wird, so dass eine wirksame formschlüssige und kraftschlüssige Verbindung zwischen der Dämpfungsschicht 3 und der Fahrradsattelschale 2 sichergestellt werden kann.

Wie aus der Figur 1 hervorgeht, sind die beiden gegenüberliegenden Ausnehmungen 9 der Fahrradsattelschale 2 jeweils durch den umlaufenden Schalenrand 8 der Fahrradsattelschale 2, jeweils durch eine Schalenrippe 12 der Fahrradsattelschale 2, jeweils durch einen vorderen Wandungsabschnitt 14-1 der Fahrradsattelschale 2 und jeweils durch einen hinteren Wandungsabschnitt 14-2 der Fahrradsattelschale 2 begrenzt. Für weitere Details hierzu wird auf die Ausführungen zu den Figuren 2, 3 und 4 verwiesen.

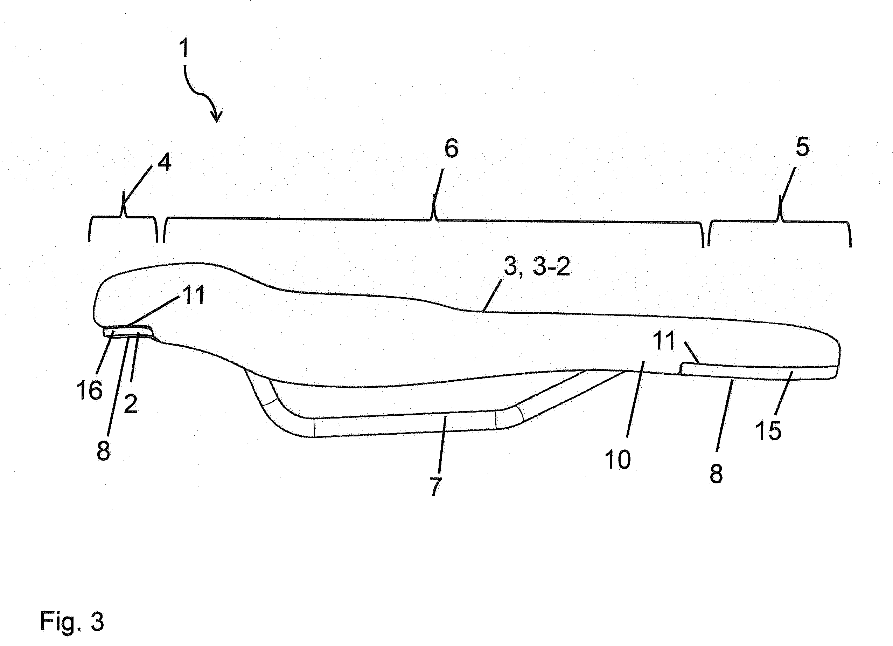

Aus der Figur 1 geht ferner hervor, dass der umlaufende Schalenrand 8 im Bereich der Sattelnase 5 des Fahrradsattels 1 einen vorderen Schalenflansch 15 aufweist, welcher über den Schalenrand 8 im mittleren Bereich 6 des Fahrradsattels 1 hinausragt. Hierbei umläuft der vordere Schalenflansch 15 die Fahrradsattelschale 2 zwischen den beiden Ausnehmungen 9. Der Schichtrand 11 der Dämpfungsschicht 13 übergreift den vorderen Schalenflansch 15 nicht, sondern liegt an einer Flanschoberseite des vorderen Schalenflanschs 15 auf, wie dies auch aus den nachfolgenden Figuren 2 und 3 der vorliegenden Anmeldung entnommen werden kann.

Aus der Figur 1 geht ferner hervor, dass der umlaufende Schalenrand 8 im hinteren Bereich 4 des Fahrradsattels 1 einen hinteren Schalenflansch 16 aufweist, welcher über den Schalenrand 8 im mittleren Bereich 6 des Fahrradsattels 1 hinausragt, wobei der hintere Schalenflansch 16 die Fahrradsattelschale 2 zwischen den beiden Ausnehmungen 9 umläuft. Der Schichtrand 11 der Dämpfungsschicht 13 übergreift den hinteren Schalenflansch 16 nicht, sondern liegt an einer Flanschoberseite des hinteren Schalenflanschs 16 auf, wie dies auch aus den nachfolgenden Figuren 2 und 3 der vorliegenden Anmeldung entnommen werden kann.

Ferner kann der Fahrradsattel 1 einen in Figur 1 nicht dargestellten Fahrradsattelbezug aufweisen, welcher das elastische Material der Dämpfungsschicht 3 zumindest abschnittsweise, insbesondere vollständig, umschließt, und damit einen besonders vorteilhaften Schutz des elastischen Materials der Dämpfungsschicht 3 vor Verschleiß und/oder Witterungseinflüssen sicherstellt.

Ferner ist die Fahrradsattelschale 2 des Fahrradsattels 1 insbesondere als ein 3D-Druck-Bauteil oder als ein Spritzgussformteil geformt. Dadurch lassen sich die teilweise komplexen Geometrien der Ausnehmungen 9 auf eine vorteilhafte Weise einfach und kostengünstig in die Fahrradsattelschale 2 des Fahrradsattels 1 einführen.

Zusammenfassend kann festgehalten werden, dass ein vorteilhafter modularer Aufbau des erfindungsgemäßen Fahrradsattels 1 erreicht werden kann, bei dem die Dämpfungsschicht 3 einfach und lösbar, bzw. austauschbar auf der Fahrradsattelschale 2 angebracht und auch wieder entfernt werden kann.

Bei unterschiedlichen Gewichten, bzw. unterschiedlichen Körperproportionen von unterschiedlichen Fahrradfahrern, bzw. bei unterschiedlichen Fahrradtouren, z.B. bei einer Mountainbike-Tour im Gelände oder bei einer Rennrad-Tour auf der Straße, ermöglicht dies die einfache Verwendung von unterschiedlichen Dämpfungsschichten 3 auf der Fahrradsattelschale 2 je nach beabsichtigter Verwendung.

Somit stellt die Dämpfungsschicht 3 gemäß der vorliegenden Offenbarung eine Vielzahl von individuell anpassbaren und austauschbaren Dämpfungsvarianten bereit, welche zudem je nach Nutzerwunsch in Bezug auf die gewünschte Farbe, Form und Design angepasst werden können.

Figur 2 zeigt den Fahrradsattel gemäß der ersten Ausführungsform in einer unterseitigen Darstellung.

In der Figur 2 ist der hintere Bereich 4 des Fahrradsattels 1, die Sattelnase 5 des Fahrradsattels 1, und der mittlere Bereich 6 des Fahrradsattels 1 zwischen der Sattelnase 5 und dem hinteren Bereich 4 schematisch dargestellt.

Aus der in Figur 2 dargestellten unterseitigen Ansicht des Fahrradsattels 1 kann das Hintergreifen der beiden an der Unterseite 2-2 der Fahrradsattelschale 2 geformten gegenüberliegenden Ausnehmungen 9 durch die beiden Vorsprünge 10 der Dämpfungsschicht 3 im mittleren Bereich 6 des Fahrradsattels 1 vorteilhaft entnommen werden.

Die beiden Ausnehmungen 9, welche in der unterseitigen Darstellung der Figur 2 durch die hintergreifenden Vorsprünge 10 abgedeckt sind, weisen in einem der Sattelnase 5 zugewandten Abschnitt des mittleren Bereichs 6 des Fahrradsattels 1 jeweils einen konkav gekrümmten Ausnehmungsabschnitt 9-1, und weisen in einem dem hinteren Bereich 4 zugewandten Abschnitt des mittleren Bereichs 6 des Fahrradsattels 1 jeweils einen konvex gekrümmten Ausnehmungsabschnitt 9-2 auf.

Somit weisen die Ausnehmungen 9 jeweils einen S-förmigen Verlauf mit zwei unterschiedlichen Krümmungsrichtungen auf und verlaufen damit im mittleren Bereich 6 des Fahrradsattels 1 entlang des entsprechend gekrümmten Schalenrandes 8 der Fahrradsattelschale 2.

Hierbei verlaufen die beiden Ausnehmungen 9 insbesondere in Bezug auf eine Mittelachse 13 der Fahrradsattelschale 2 symmetrisch zueinander.

Auch wenn der Schalenrand 8 der Fahrradsattelschale 2 in der unterseitigen Darstellung gemäß der Figur 2 im mittleren Bereich 6 des Fahrradsattels 1 durch die beiden Vorsprünge 10 abgedeckt ist, kann in der Figur 2 dennoch die jeweilige an der Unterseite 2-2 der Fahrradsattelschale 2 angeordnete Schalenrippe 12 erkannt werden, welche die jeweilige Ausnehmung 9 innenseitig begrenzt.

Die Schalenrippen 12 erstrecken sich winklig, insbesondere rechtwinklig, zum Schalenrand 8 der Fahrradsattelschale 2, so dass, wie aus der Figur 2 ersichtlich ist, die jeweiligen die Ausnehmungen 9 hintergreifenden Vorsprünge 10 an der jeweiligen Schalenrippe 12 insbesondere anliegen.

Offensichtlich weist die jeweilige Schalenrippe 12, welche die jeweilige Ausnehmung 9 innenseitig begrenzt, eine der jeweiligen Ausnehmung 9 entsprechende Krümmung auf.

Somit weist die jeweilige Schalenrippe 12 in einem der Sattelnase 5 zugewandten Abschnitt des mittleren Bereichs 6 des Fahrradsattels 1 einen insbesondere konkav gekrümmten Schalenrippenabschnitt 12-1 auf, und weist die jeweilige Schalenrippe 12 in einem dem hinteren Bereich 4 zugewandten Abschnitt des mittleren Bereichs 6 des Fahrradsattels 1 einen insbesondere konvex gekrümmten Schalenrippenabschnitt 12-2 auf.

Hierbei verlaufen die beiden Schalenrippen 12 insbesondere in Bezug auf eine Mittelachse 13 der Fahrradsattelschale 2 symmetrisch zueinander.

Somit bildet die jeweilige entsprechend in zwei Krümmungsrichtungen gekrümmte jeweilige Schalenrippe 12 den entsprechenden S-förmig gekrümmten Verlauf der jeweiligen Ausnehmung 9 ab.

Aus der Figur 2 kann ferner entnommen werden, dass die jeweilige Ausnehmung 9 an der Grenze zwischen dem mittleren Bereich 6 und der Sattelnase 5 des Fahrradsattels 1 durch einen vorderen Wandungsabschnitt 14-1 begrenzt ist, und dass die jeweilige Ausnehmung 9 an der Grenze zwischen dem mittleren Bereich 6 und dem hinteren Bereich 4 des Fahrradsattels 1 durch einen hinteren Wandungsabschnitt 14-2 begrenzt ist.

Somit wird die jeweilige Ausnehmung 9 durch den Schalenrand 8, die jeweilige Schalenrippe 12, den jeweiligen vorderen Wandungsabschnitt 14-1, und den jeweiligen hinteren Wandungsabschnitt 14-1 der Fahrradsattelschale 2 begrenzt, und ermöglicht somit ein wirksames Hintergreifen durch den jeweiligen Vorsprung 10 der Dämpfungsschicht 3.

Figur 3 zeigt den Fahrradsattel gemäß der ersten Ausführungsform in einer seitlichen Darstellung.

In der Figur 3 ist der hintere Bereich 4 des Fahrradsattels 1, die Sattelnase 5 des Fahrradsattels 1, und der mittlere Bereich 6 des Fahrradsattels 1 zwischen der Sattelnase 5 und dem hinteren Bereich 4 schematisch dargestellt.

In der seitlichen Darstellung gemäß der Figur 3 ist der Fahrradsattel 1, ebenso wie in der Figur 2 dargestellt, in einem zusammengefügten Zustand gezeigt, so dass die Dämpfungsschicht 3 mit der Fahrradsattelschale 2 formschlüssig verbunden ist.

Die beiden Vorsprünge 10 der Dämpfungsschicht 3 hintergreifen hierbei die in Figur 3 nicht dargestellten Ausnehmungen 9, welche an der Unterseite 2-2 der Fahrradsattelschale 2 im mittleren Bereich 6 des Fahrradsattels 1 geformt sind, um eine formschlüssige Befestigung der Dämpfungsschicht 3 an der Fahrradsattelschale 2 zu erreichen.

Somit ist, wie aus der Figur 3 entnommen werden kann, der umlaufende Schalenrand 8 der Fahrradsattelschale 2 im mittleren Bereich 6 des Fahrradsattels 1 durch die beiden Vorsprünge 10 der Dämpfungsschicht 3 abgedeckt.

Andererseits ist der umlaufende Schalenrand 8 der Fahrradsattelschale 2 im hinteren Bereich 4 des Fahrradsattels 1 und im Bereich der Sattelnase 5 des Fahrradsattels 1 durch den umlaufenden Schichtrand 11 der Dämpfungsschicht 3 nicht abgedeckt, und kann daher entsprechend der Figur 3 dargestellten Blickrichtung seitlich eingesehen werden.

Aus der Figur 3 kann ferner entnommen werden, dass der umlaufende Schalenrand 8 im Bereich der Sattelnase 5 des Fahrradsattels 1 einen vorderen Schalenflansch 15 und im hinteren Bereich 4 des Fahrradsattels 1 einen hinteren Schalenflansch 16 aufweist. Sowohl der vordere Schalenflansch 15 als auch der hintere Schalenflansch 16 ragen über den Schalenrand 8 im mittleren Bereich 6 des Fahrradsattels 1 hinaus.

Auch wenn der umlaufenden Schichtrand 11 der Dämpfungsschicht 3 den vorderen Schalenflansch 15 und den hinteren Schalenflansch 16 somit nicht abdeckt, bzw. übergreift, liegt der umlaufenden Schichtrand 11 der Dämpfungsschicht 3 auf einer Flanschoberseite des vorderen Schalenflanschs 15 und auf einer Flanschoberseite des hinteren Schalenflanschs 16 auf.

Somit stellt der vordere Schalenflansch 15, bzw. der hintere Schalenflansch 16 eine wirksame Stütze für die Dämpfungsschicht 3 im Bereich der Sattelnase 5 des Fahrradsattels 1, bzw. im Bereich des hinteren Bereichs 4 des Fahrradsattels 1 sicher.

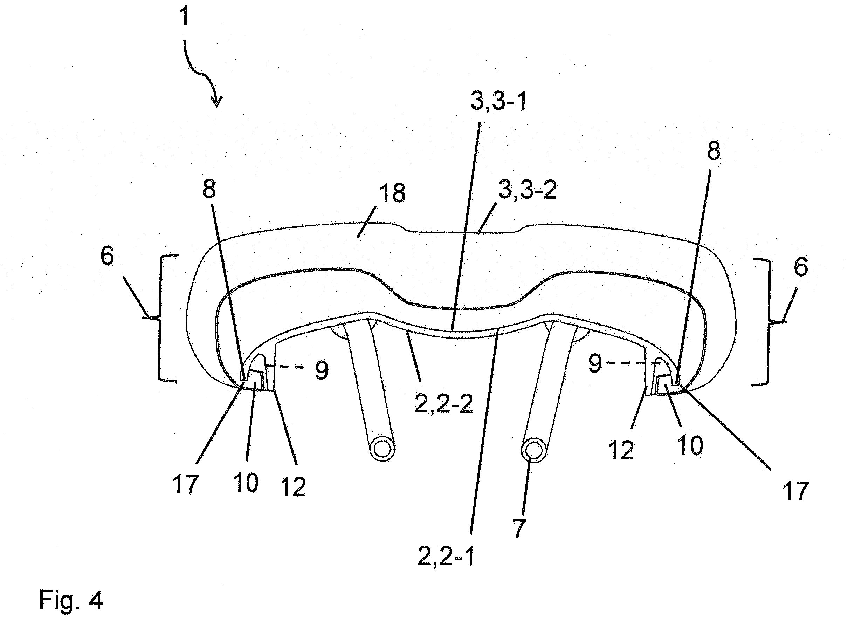

Figur 4 zeigt den Fahrradsattel gemäß der ersten Ausführungsform in einer Schnittdarstellung.

Auch in der Figur 4 ist der hintere Bereich 4 des Fahrradsattels 1, die Sattelnase 5 des Fahrradsattels 1, und der mittlere Bereich 6 des Fahrradsattels 1 zwischen der Sattelnase 5 und dem hinteren Bereich 4 schematisch dargestellt.

In der in Figur 4 gezeigten Schnittdarstellung verläuft der Schnitt durch die Dämpfungsschicht 3, durch die Fahrradsattelschale 2 und durch die Sattelhalterung 7 des zusammengefügten Fahrradsattels 1.

Auch in der Figur 4 liegt die Unterseite 3-1 der Dämpfungsschicht 3 an der Oberseite 2-1 der Fahrradsattelschale 2 an, und stellt dadurch einen wirksamen Verbund zwischen der Dämpfungsschicht 3 und der Fahrradsattelschale 2 sicher.

Aus der Figur 4 ist vorteilhaft zu erkennen, wie die beiden Vorsprünge 10 der Dämpfungsschicht 3 die jeweiligen gegenüberliegenden Ausnehmungen 9 an der Unterseite 2-2 der Fahrradsattelschale 2 hintergreifen, um eine formschlüssige Befestigung der Dämpfungsschicht 3 an der Fahrradsattelschale 2 zu erreichen.

Die jeweilige Ausnehmung 9 wird hierbei außenseitig durch den Schalenrand 8 der Fahrradsattelschale 2 und innenseitig durch die jeweilige Schalenrippe 12 begrenzt.

Aus der Figur 4 ist ferner erkennbar, dass die Dämpfungsschicht 3 zwei sich gegenüberliegende weitere Vertiefungen 17, insbesondere Rillen, aufweist, wobei jeweils eine der beiden Vertiefungen zwischen jeweils einem der beiden Vorsprünge 10 der Dämpfungsschicht 3 und dem Hauptkörper 18 der Dämpfungsschicht 3 angeordnet ist.

Der Schalenrand 8 der Fahrradsattelschale 2 greift hierbei im mittleren Bereich 6 des Fahrradsattels 1 in die jeweilige weitere Vertiefung 17, insbesondere Rille, der Dämpfungsschicht 3 ein, um eine wirksame Arretierung des jeweiligen Vorsprungs 10 in der jeweiligen Ausnehmung 9 sicherzustellen und damit ein Herausrutschen des jeweiligen Vorsprungs 10 aus der jeweiligen Ausnehmung 9 zu verhindern.

Somit wird eine stabile Befestigung der Dämpfungsschicht 3 an der Fahrradsattelschale 2 sichergestellt.

Für weitere Details hierzu wird auf die umfangreichen Ausführungen zu den Figuren 1, 2 und 3 verwiesen.

### Bezugszeichen

- 1: Fahrradsattel
- 2: Fahrradsattelschale
- 2-1: Oberseite der Fahrradsattelschale
- 2-2: Unterseite der Fahrradsattelschale
- 3: Dämpfungsschicht
- 3-1: Unterseite der Dämpfungsschicht
- 3-2: Oberseite der Dämpfungsschicht
- 4: Hinterer Bereich des Fahrradsattels
- 5: Sattelnase des Fahrradsattels
- 6: Mittlerer Bereich des Fahrradsattels
- 7: Sattelhalterung
- 8: Schalenrand
- 9: Ausnehmung
- 9-1: Konkav gekrümmte Ausnehmung
- 9-2: Konvex gekrümmte Ausnehmung
- 10: Vorsprung
- 11: Schichtrand
- 12: Schalenrippe
- 12-1: Konkav gekrümmter Schalenrippenabschnitt
- 12-2: Konvex gekrümmter Schalenrippenabschnitt
- 13: Mittelachse der Fahrradsattelschale
- 14-1: Vorderer Wandungsabschnitt
- 14-2: Hinterer Wandungsabschnitt
- 15: Vorderer Schalenflansch
- 16: Hinterer Schalenflansch
- 17: Weitere Vertiefung
- 18: Hauptkörper der Dämpfungsschicht

## Patentansprüche

1. Fahrradsattel (1), welcher an einem Fahrrad befestigbar ist, wobei der Fahrradsattel (1) eine Sattelnase (5) und einen hinteren Bereich (4) aufweist, und wobei der Fahrradsattel (1) einen mittleren Bereich (6) aufweist, welcher zwischen dem hinteren Bereich (4) und der Sattelnase (5) angeordnet ist, wobei der Fahrradsattel (1) eine Fahrradsattelschale (2) und eine Dämpfungsschicht (3) aufweist, welche an der Fahrradsattelschale (2) befestigt ist, wobei die Dämpfungsschicht (3) ein elastisches Material umfasst, welches ausgebildet ist, auf den Fahrradsattel (1) wirkende Kräfte durch eine Verformung des elastischen Materials aufzunehmen,
**dadurch gekennzeichnet, dass**
die Fahrradsattelschale (2) durch einen umlaufenden Schalenrand (8) begrenzt ist, wobei an einer Unterseite (2-2) der Fahrradsattelschale (2) zwei sich gegenüberliegende Ausnehmungen (9) geformt sind, welche sich im mittleren Bereich (6) des Fahrradsattels (1) jeweils abschnittsweise entlang des Schalenrands (8) erstrecken,
dass die Dämpfungsschicht (3) durch einen umlaufenden Schichtrand (11) begrenzt ist, wobei die Dämpfungsschicht (3) zwei sich gegenüberliegende Vorsprünge (10) aufweist, welche sich im mittleren Bereich (6) des Fahrradsattels (1) jeweils abschnittsweise entlang des Schichtrands (11) erstrecken, und
dass die beiden Vorsprünge (10) ausgebildet sind, jeweils die gegenüberliegenden Ausnehmungen (9) zu hintergreifen, um eine formschlüssige Befestigung der Dämpfungsschicht (3) an der Fahrradsattelschale (2) zu erreichen.

2. Fahrradsattel (1) nach Anspruch 1, wobei der umlaufende Schalenrand (8) der Fahrradsattelschale (2) im mittleren Bereich (6) des Fahrradsattels (1) durch die beiden Vorsprünge (10) der Dämpfungsschicht (3) abgedeckt ist.

3. Fahrradsattel (1) nach Anspruch 1 oder 2, wobei der umlaufende Schalenrand (8) der Fahrradsattelschale (2) im Bereich der Sattelnase (5) des Fahrradsattels (1) und im hinteren Bereich (4) des Fahrradsattels (1) durch den umlaufenden Schichtrand (11) der Dämpfungsschicht (3) nicht abgedeckt ist.

4. Fahrradsattel (1) nach einem der vorangehenden Ansprüche, wobei die beiden Ausnehmungen (9) jeweils einen konvex gekrümmten Ausnehmungsabschnitt (9-2) und einen sich an den konvex gekrümmten Ausnehmungsabschnitt (9-2) anschließenden konkav gekrümmten Ausnehmungsabschnitt (9-1) aufweisen,
wobei insbesondere der konkav gekrümmte Ausnehmungsabschnitt (9-1) der jeweiligen Ausnehmung (9) in einem der Sattelnase (5) zugewandten Abschnitt des mittleren Bereichs (6) des Fahrradsattels (1) angeordnet ist, und
wobei insbesondere der konvex gekrümmte Ausnehmungsabschnitt (9-2) der jeweiligen Ausnehmung (9) in einem dem hinteren Bereich (4) zugewandten Abschnitt des mittleren Bereichs (6) des Fahrradsattels (1) angeordnet ist.

5. Fahrradsattel (1) nach einem der vorangehenden Ansprüche, wobei die beiden an der Unterseite (2-2) der Fahrradsattelschale (2) geformten sich gegenüberliegenden Ausnehmungen (9) jeweils durch den Schalenrand (8) und durch eine an der Unterseite (2-2) der Fahrradsattelschale (2) geformte Schalenrippe (12) begrenzt sind, wobei sich die jeweilige Schalenrippe (12) winklig, insbesondere rechtwinklig, zum jeweiligen Schalenrand (8) erstreckt.

6. Fahrradsattel (1) nach Anspruch 5, wobei die beiden Schalenrippen (12) jeweils einen konvex gekrümmten Schalenrippenabschnitt (12-2) und einen sich an den konvex gekrümmten Schalenrippenabschnitt (12-2) anschließenden konkav gekrümmten Schalenrippenabschnitt (12-1) aufweisen,
wobei insbesondere der konkav gekrümmte Schalenrippenabschnitt (12-1) der jeweiligen Schalenrippe (12) in einem der Sattelnase (5) zugewandten Abschnitt des mittleren Bereichs (6) des Fahrradsattels (1) angeordnet ist, und
wobei insbesondere der konvex gekrümmte Schalenrippenabschnitt (12-2) der jeweiligen Schalenrippe (12) in einem dem hinteren Bereich (4) zugewandten Abschnitt des mittleren Bereichs (6) des Fahrradsattels (1) angeordnet ist.

7. Fahrradsattel (1) nach einem der vorangehenden Ansprüche, wobei die jeweilige Ausnehmung (9) an der Grenze zwischen dem mittleren Bereich (6) und der Sattelnase (5) des Fahrradsattels (1) durch einen vorderen Wandungsabschnitt (14-1) begrenzt ist, und wobei die jeweilige Ausnehmung (9) an der Grenze zwischen dem mittleren Bereich (6) und dem hinteren Bereich (4) des Fahrradsattels (1) durch einen hinteren Wandungsabschnitt (14-2) begrenzt ist.

8. Fahrradsattel (1) nach einem der vorangehenden Ansprüche, wobei der umlaufende Schalenrand (8) im Bereich der Sattelnase (5) des Fahrradsattels (1) einen vorderen Schalenflansch (15) aufweist, welcher über den Schalenrand (8) im mittleren Bereich (6) des Fahrradsattels (1) hinausragt, wobei der vordere Schalenflansch (15) die Fahrradsattelschale (2) zwischen den beiden Ausnehmungen (9) umläuft, und wobei insbesondere der Schichtrand (11) der Dämpfungsschicht (3) den vorderen Schalenflansch (15) nicht übergreift.

9. Fahrradsattel (1) nach einem der vorangehenden Ansprüche, wobei der umlaufende Schalenrand (8) im hinteren Bereich (4) des Fahrradsattels (1) einen hinteren Schalenflansch (16) aufweist, welcher über den Schalenrand (8) im mittleren Bereich (6) des Fahrradsattels (1) hinausragt, wobei der hintere Schalenflansch (16) die Fahrradsattelschale (2) zwischen den beiden Ausnehmungen (9) umläuft, und wobei insbesondere der Schichtrand (11) der Dämpfungsschicht (3) den hinteren Schalenflansch (16) nicht übergreift.

10. Fahrradsattel (1) nach Anspruch 8 oder 9, wobei der vordere Schalenflansch (15) und/oder der hintere Schalenflansch (16) eine der Unterseite (2-2) der Fahrradsattelschale (2) abgewandte Flanschoberseite aufweisen, wobei der Schichtrand (11) der Dämpfungsschicht (3) auf der Flanschoberseite des vorderen Schalenflanschs (15) und/oder auf der Flanschoberseite des hinteren Schalenflanschs (16) aufliegt.

11. Fahrradsattel (1) nach einem der vorangehenden Ansprüche, wobei die Unterseite (2-2) der Fahrradsattelschale (2) im Bereich der beiden an der Unterseite (2-2) der Fahrradsattelschale (2) geformten Ausnehmungen (9) eben geformt ist oder wobei die Unterseite (2-2) der Fahrradsattelschale (2) im Bereich der beiden an der Unterseite (2-2) der Fahrradsattelschale (2) geformten Ausnehmungen (9) eine sich entlang des Schalenrands (8) erstreckende Vertiefung aufweist.

12. Fahrradsattel (1) nach einem der vorangehenden Ansprüche, wobei die Dämpfungsschicht (3) mit der Fahrradsattelschale (2) formschlüssig, sowie kraftschlüssig und/oder stoffschlüssig verbunden ist.

13. Fahrradsattel (1) nach einem der vorangehenden Ansprüche, wobei der Fahrradsattel (1) einen Fahrradsattelbezug aufweist, welcher das elastische Material der Dämpfungsschicht (3) zumindest abschnittsweise, insbesondere vollständig, umschließt.

14. Fahrradsattel (1) nach einem der vorangehenden Ansprüche, wobei die Fahrradsattelschale (2) einen Thermoplast-Kunststoff oder einen Carbon-Thermoplast-Verbundstoff umfasst, und/oder wobei die Dämpfungsschicht (3) ein thermoplastisches Polyurethan (TPU), insbesondere expandiertes thermoplastisches Polyurethan (E-TPU), ein thermoplastisches Elastomer (TPE), ein thermoplastisches Elastomer-Vulkanisat (TPE-V), Polyurethan (PU), Ethylen-Vinylacetat-Copolymer (EVA), und/oder Polystyrol (PS), insbesondere expandiertes Polystyrol (EPS) umfasst.

15. Fahrradsattel (1) nach einem der vorangehenden Ansprüche, wobei die Fahrradsattelschale (2) als ein 3D-Druck-Bauteil oder als ein Spritzgussformteil geformt ist.

16. Fahrradsattel (1) nach einem der vorangehenden Ansprüche, wobei die Dämpfungsschicht (3) zwei sich gegenüberliegende weitere Vertiefungen (17) aufweist, welche jeweils insbesondere zwischen dem jeweiligen Vorsprung (10) der Dämpfungsschicht (3) und einem Hauptkörper (18) der Dämpfungsschicht (3) angeordnet ist, wobei der Schalenrand (8) der Fahrradsattelschale (2) im mittleren Bereich (6) des Fahrradsattels (1) in die jeweilige weitere Vertiefung (17) der Dämpfungsschicht (3) eingreift, um eine wirksame Arretierung des jeweiligen Vorsprungs (10) in der jeweiligen Ausnehmung (9) zu erreichen.

## Claims

1. A bicycle saddle (1) that can be fastened on a bicycle, wherein the bicycle saddle (1) has a saddle nose (5) and a rear region (4), wherein the bicycle saddle (1) has a central region (6) that is arranged between the rear region (4) and the saddle nose (5), wherein the bicycle saddle (1) has a bicycle saddle shell (2) and a damping layer (3) that is fastened on the bicycle saddle shell (2), and wherein the damping layer (3) comprises an elastic material that is designed for absorbing forces acting upon the bicycle saddle (1) due to a deformation of the elastic material,
**characterized in that**
the bicycle saddle shell (2) is delimited by a peripheral shell edge (8), wherein two opposing recesses (9) are formed on an underside (2-2) of the bicycle saddle shell (2) and respectively extend sectionally along the shell edge (8) in the central region (6) of the bicycle saddle (1);
**in that** the damping layer (3) is delimited by a peripheral layer edge (11), wherein the damping layer (3) has two opposing projections (10) that respectively extend sectionally along the layer edge (11) in the central region (6) of the bicycle saddle (1), and
**in that** the two projections (10) are designed for respectively engaging behind the opposing recesses (9) in order to achieve form-fitted fastening of the damping layer (3) on the bicycle saddle shell (2).

2. The bicycle saddle (1) according to claim 1, wherein the peripheral shell edge (8) of the bicycle saddle shell (2) is covered by the two projections (10) of the damping layer (3) in the central region (6) of the bicycle saddle (1).

3. The bicycle saddle (1) according to claim 1 or 2, wherein the peripheral shell edge (8) of the bicycle saddle shell (2) is not covered by the peripheral layer edge (11) of the damping layer (3) in the region of the saddle nose (5) of the bicycle saddle (1) and in the rear region (4) of the bicycle saddle (1).

4. The bicycle saddle (1) according to one of the preceding claims, wherein the two recesses (9) respectively have a convexly curved recess section (9-2) and a concavely curved recess section (9-1) adjoining the convexly curved recess section (9-2),
wherein the concavely curved recess section (9-1) of the respective recess (9) particularly is arranged in a section of the central region (6) of the bicycle saddle (1) facing the saddle nose (5), and
wherein the convexly curved recess section (9-2) of the respective recess (9) particularly is arranged in a section of the central region (6) of the bicycle saddle (1) facing the rear region (4).

5. The bicycle saddle (1) according to one of the preceding claims, wherein the two opposing recesses (9) formed on the underside (2-2) of the bicycle saddle shell (2) are respectively delimited by the shell edge (8) and by a shell rib (12) formed on the underside (2-2) of the bicycle saddle shell (2), and wherein the respective shell rib (12) extends at an angle, particularly at a right angle, to the respective shell edge (8).

6. The bicycle saddle (1) according to claim 5, wherein the two shell ribs (12) respectively have a convexly curved shell rib section (12-2) and a concavely curved shell rib section (12-1) adjoining the convexly curved shell rib section (12-2),
wherein the concavely curved shell rib section (12-1) of the respective shell rib (12) particularly is arranged in a section of the central region (6) of the bicycle saddle (1) facing the saddle nose (5), and
wherein the convexly curved shell rib section (12-2) of the respective shell rib (12) particularly is arranged in a section of the central region (6) of the bicycle saddle (1) facing the rear region (4).

7. The bicycle saddle (1) according to one of the preceding claims, wherein the respective recess (9) is delimited by a front wall section (14-1) at the border between the central region (6) and the saddle nose (5) of the bicycle saddle (1), and wherein the respective recess (9) is delimited by a rear wall section (14-2) at the border between the central region (6) and the rear region (4) of the bicycle saddle (1).

8. The bicycle saddle (1) according to one of the preceding claims, wherein the peripheral shell edge (8) has a front shell flange (15), which protrudes beyond the shell edge (8) in the central region (6) of the bicycle saddle (1), in the region of the saddle nose (5) of the bicycle saddle (1), wherein the front shell flange (15) extends peripherally around the bicycle saddle shell (2) between the two recesses (9), and wherein the layer edge (11) of the damping layer (3) particularly does not overlap the front shell flange (15).

9. The bicycle saddle (1) according to one of the preceding claims, wherein the peripheral shell edge (8) has a rear shell flange (16), which protrudes beyond the shell edge (8) in the central region (6) of the bicycle saddle (1), in the rear region (4) of the bicycle saddle (1), wherein the rear shell flange (16) extends peripherally around the bicycle saddle shell (2) between the two recesses (9), and wherein the layer edge (11) of the damping layer (3) particularly does not overlap the rear shell flange (16).

10. The bicycle saddle (1) according to claim 8 or 9, wherein the front shell flange (15) and/or the rear shell flange (16) have an upper flange surface that faces away from the underside (2-2) of the bicycle saddle shell (2), and wherein the layer edge (11) of the damping layer (3) rests on the upper flange surface of the front shell flange (15) and/or on the upper flange surface of the rear shell flange (16).

11. The bicycle saddle (1) according to one of the preceding claims, wherein the underside (2-2) of the bicycle saddle shell (2) is shaped in a planar manner in the region of the two recesses (9) formed on the underside (2-2) of the bicycle saddle shell (2) or wherein the underside (2-2) of the bicycle saddle shell (2) has a depression extending along the shell edge (8) in the region of the two recesses (9) formed on the underside (2-2) of the bicycle saddle shell (2).

12. The bicycle saddle (1) according to one of the preceding claims, wherein the damping layer (3) is connected to the bicycle saddle shell (2) in a form-fitted manner, as well as in a force fitting and/or cohesive integral manner.

13. The bicycle saddle (1) according to one of the preceding claims, wherein the bicycle saddle (1) has a bicycle saddle cover that encloses the elastic material of the damping layer (3) at least sectionally, particularly completely.

14. The bicycle saddle (1) according to one of the preceding claims, wherein the bicycle saddle shell (2) comprises a thermoplastic resin or a carbon-thermoplast compound and/or wherein the damping layer (3) comprises a thermoplastic polyurethane (TPU), particularly expanded thermoplastic polyurethane (E-TPU), a thermoplastic elastomer (TPE), a thermoplastic elastomer vulcanisate (TPE-V), polyurethane (PU), ethylene-vinyl acetate copolymer (EVA) and/or polystyrene (PS), particularly expanded polystyrene (EPS).

15. The bicycle saddle (1) according to one of the preceding claims, wherein the bicycle saddle shell (2) is realized in the form of a 3D-printed component or in the form of an injection-molded part.

16. The bicycle saddle (1) according to one of the preceding claims, wherein the damping layer (3) has two additional opposing depressions (17) that are respectively arranged, in particular, between the respective projection (10) of the damping layer (3) and a main body (18) of the damping layer (3), and wherein the shell edge (8) of the bicycle saddle shell (2) engages into the respective additional depression (17) of the damping layer (3) in the central region (6) of the bicycle saddle (1) in order to achieve effective interlocking of the respective projection (10) in the respective recess (9).

## Revendications

1. Selle de bicyclette (1), laquelle est susceptible d'être fixée sur une bicyclette, la selle de bicyclette (1) comportant un bec de selle (5) et une zone arrière (4), et la selle de bicyclette (1) comportant une zone (6) médiane, laquelle est placée entre la zone arrière (4) et le bec de selle (5), la selle de bicyclette (1) comportant une coque (2) de selle de bicyclette et une couche d'amortissement (3), laquelle est fixée sur la coque (2) de selle de bicyclette, la couche d'amortissement (3) comprenant une matière élastique, laquelle est conçue pour absorber des forces agissant sur la selle de bicyclette (1) par une déformation de la matière élastique,
**caractériséeen ce que**
la coque (2) de selle de bicyclette est délimitée par un bord (8) de coque périphérique, sur une face inférieure (2-2) de la coque (2) de selle de bicyclette étant façonnés deux évidements (9) mutuellement opposés, lesquels s'étendent dans la zone médiane (6) de la selle de bicyclette (1), chacun par endroits le long du bord (8) de coque ;
en ce que la couche d'amortissement (3) est délimitée par un bord (11) de couche périphérique, la couche d'amortissement (3) comportant deux saillies (10) mutuellement opposées, lesquelles s'étendent dans la zone médiane (6) de la selle de bicyclette (1), chacune par endroits le long du bord (11) de couche et
en ce que les deux saillies (10) sont conçues chacune pour accrocher par l'arrière les évidements (9) opposés, pour obtenir une fixation par complémentarité de forme de la couche d'amortissement (3) sur la coque (2) de selle de bicyclette.

2. Selle de bicyclette (1) selon la revendication 1, le bord (8) de coque périphérique de la coque (2) de selle de bicyclette étant recouvert dans la zone médiane (6) de la selle de bicyclette (1) par les deux saillies (10) de la couche d'amortissement (3).

3. Selle de bicyclette (1) selon la revendication 1 ou 2, le bord (8) de coque périphérique de la coque (2) de selle de bicyclette n'étant pas recouvert dans la zone du bec de selle (5) de la selle de bicyclette (1) et dans la zone arrière (4) de la selle de bicyclette (1) par le bord (11) de couche périphérique de la couche d'amortissement (3).

4. Selle de bicyclette (1) selon l'une quelconque des revendications précédentes, les deux évidements (9) comportant chacun une portion (9-2) d'évidement recourbée de forme convexe et une portion (9-1) d'évidement recourbée de forme concave, se raccordant sur la portion (9-2) d'évidement recourbée de forme convexe,
notamment la portion (9-1) d'évidement recourbée de forme concave de l'évidement (9) respectif étant placée dans une portion faisant face au bec de selle (5) de la zone médiane (6) de la selle de bicyclette (1) et
notamment la portion (9-2) d'évidement recourbée de forme convexe de l'évidement (9) respectif étant placée dans une portion faisant face à la zone arrière (4) de la zone médiane (6) de la selle de bicyclette (1).

5. Selle de bicyclette (1) selon l'une quelconque des revendications précédentes, les deux évidements (9) mutuellement opposés, façonnés sur la face inférieure (2-2) de la coque (2) de selle de bicyclette étant délimités chacun par le bord (8) de coque et par une nervure (12) façonnée sur la face inférieure (2-2) de la coque (2) de selle de bicyclette, la nervure (12) de coque respective s'étendant sous un angle, notamment sous un angle droit par rapport au bord (8) de coque respectif.

6. Selle de bicyclette (1) selon la revendication 5, les deux nervures (12) de coque comportant chacune une portion (12-2) de nervure de coque recourbée de forme convexe et une portion (12-1) de nervure de coque recourbée de forme concave, se raccordant sur la portion (12-2) de nervure de coque recourbée de forme convexe,
notamment la portion (12-1) de nervure de coque recourbée de forme concave de la nervure (12) de coque respective étant placée dans une portion faisant face au bec de selle (5) de la zone médiane (6) de la selle de bicyclette (1) et
notamment la portion (12-2) de nervure de coque recourbée de forme convexe de la nervure (12) de coque respective étant placée dans une portion faisant face à la zone arrière (4) de la zone médiane (6) de la selle de bicyclette (1).

7. Selle de bicyclette (1) selon l'une quelconque des revendications précédentes, l'évidement (9) respectif étant délimité à la limite entre la zone médiane (6) et le bec de selle (5) de la selle de bicyclette (1) par une portion (14-1) de paroi avant et l'évidement (9) respectif étant délimité à la limite entre la zone médiane (6) et la zone arrière (4) de la selle de bicyclette (1) par une portion (14-2) de paroi arrière.

8. Selle de bicyclette (1) selon l'une quelconque des revendications précédentes, le bord (8) de coque périphérique comportant dans la zone du bec de selle (5) de la selle de bicyclette (1) une bride (15) de coque avant, laquelle saillit au-delà du bord (8) de coque dans la zone médiane (6) de la selle de bicyclette (1), la bride (15) de coque avant circulant autour de la coque (2) de selle de bicyclette, entre les deux évidements (9) et notamment le bord (11) de couche de la couche d'amortissement (3) ne chevauchant pas la bride (15) de coque avant.

9. Selle de bicyclette (1) selon l'une quelconque des revendications précédentes, le bord (8) de coque périphérique comportant dans la zone arrière (4) de la selle de bicyclette (1) une bride (16) de coque arrière, laquelle saillit au-delà du bord (8) de coque dans la zone médiane (6) de la selle de bicyclette (1), la bride (16) de coque arrière circulant autour de la coque (2) de selle de bicyclette entre les deux évidements (9) et notamment le bord (11) de couche de la couche d'amortissement (3) ne chevauchant pas la bride (16) de coque arrière.

10. Selle de bicyclette (1) selon la revendication 8 ou 9, la bride (15) de coque avant et / ou la bride (16) de coque arrière comportant une face supérieure de bride opposée à la face inférieure (2-2) de la coque (2) de selle de bicyclette, le bord (11) de couche de la couche d'amortissement (3) reposant sur la face supérieure de bride de la bride (15) de coque avant et / ou sur la face supérieure de bride de la bride (16) de coque arrière.

11. Selle de bicyclette (1) selon l'une quelconque des revendications précédentes, la face inférieure (2-2) de la coque (2) de selle de bicyclette étant façonnée de forme plane dans la zone arrière des deux évidements (9) façonnés sur la face inférieure (2-2) de la coque (2) de selle de bicyclette ou la face inférieure (2-2) de la coque (2) de selle de bicyclette comportant dans la zone des deux évidements (9) façonnés sur la face inférieure (2-2) de la coque (2) de selle de bicyclette un creux s'étendant le long du bord (8) de coque.

12. Selle de bicyclette (1) selon l'une quelconque des revendications précédentes, la couche d'amortissement (3) étant assemblée avec la coque (2) de selle de bicyclette par complémentarité de forme, ainsi que par complémentarité de force et / ou par conjugaison de matières.

13. Selle de bicyclette (1) selon l'une quelconque des revendications précédentes, la selle de bicyclette (1) comportant une housse de selle de bicyclette, laquelle entoure au moins par endroits, notamment totalement la matière élastique de la couche d'amortissement (3).

14. Selle de bicyclette (1) selon l'une quelconque des revendications précédentes, la coque (2) de selle de bicyclette comprenant une matière thermoplastique ou un composite matière thermoplastique-carbone et / ou la couche d'amortissement (3) comprenant un polyuréthane thermoplastique (TPU), notamment un polyuréthane thermoplastique expansé (E-TPU), un élastomère thermoplastique (TPE), un élastomère thermoplastique vulcanisé (TPE-V), un polyuréthane (PU), un copolymère éthylène-vinylacétate (EVA), et / ou un polystyrène (PS), notamment un polystyrène expansé (EPS).

15. Selle de bicyclette (1) selon l'une quelconque des revendications précédentes, la coque (2) de selle de bicyclette étant façonnée sous la forme d'un composant imprimé en 3 D ou d'une pièce moulée par injection.

16. Selle de bicyclette (1) selon l'une quelconque des revendications précédentes, la couche d'amortissement (3) comportant deux creux (17) supplémentaires mutuellement opposés, dont chacun est placé notamment entre la saillie (10) respective de la couche d'amortissement (3) et un corps principal (18) de la couche d'amortissement (3), dans la zone médiane (6) de la selle de bicyclette (1), le bord (8) de coque de la coque (2) de selle de bicyclette s'engageant dans le creux (17) supplémentaire respectif de la couche d'amortissement (3), pour obtenir un blocage efficace de la saillie (10) supplémentaire dans l'évidement (9) respectif.
